# EUROPÄISCHE PATENTSCHRIFT

(11) **EP 1 198 369 B1**
(45) Veröffentlichungstag und Bekanntmachung des Hinweises auf die Patenterteilung: **05.11.2003**
(21) Anmeldenummer: 00947664.9
(22) Anmeldetag: 26.07.2000
(51) Int. Cl.: B60N 2/66, A47C 7/46

(54) **Anatomisch formbare Stütze, insbesondere Lordosenstütze**
Adjustable anatomical support, particularly lumbar support
Support réglable anatomique, notamment support lombaire

(30) Priorität: 04.08.1999 AT 134399
(43) Veröffentlichungstag der Anmeldung: 24.04.2002
(73) Patentinhaber: Schukra Berndorf Ges.m.b.H., 2560 Berndorf (AT)
(72) Erfinder: KLINGLER, Knud, A-4210 Engerwitzdorf/Schweinbach (AT)
(74) Vertreter: Banzer, Hans-Jörg, Dipl.-Ing.
(86) Internationale Anmeldenummer: AT0000206
(87) Internationale Veröffentlichungsnummer: WO01010670

(56) Entgegenhaltungen:
- WO-A-95/19123
- US-A- 5 769 491

## Beschreibung

Die Erfindung hat eine anatomisch formbare Stütze, insbesondere Lordosenstütze, für Sitze, Liegen od. dgl. mit einem Rahmen, welcher mit einem reversibel wölbbaren anatomischen Stützteil verbunden ist, zum Gegenstand (siehe z.B. AT 402.145 B, dem Oberbegriff entsprechend).

Stützen, welche entsprechend anatomischen Vorgaben geformt werden können, weisen einen stetig steigenden Einsatz auf. Neben Stützen, die eine im wesentlichen druckmaximavermeidende Haltung der Oberschenkel erlauben, sind die sogenannten Lordosenstützen von besonderer Bedeutung. Durch die bevorzugt nach vorne gebeugte Haltung von Sitzenden wird die naturgemäß vorgesehene nach vorne konkav Verbiegung der Wirbelsäule durch eine im wesentlichen konvex nach außen gekrümmte ersetzt, wodurch neben einer schnelleren Ermüdung auch Schmerz und eine unerwünschte Verformung der Bandscheiben erfolgt. Um eine derartige unerwünschte teilweise jedoch unwillkürlich auftretende Krümmung des Rückgrates hintanzuhalten, werden sowohl in Liegen als auch in Sitzen Lordosenstützen vorgesehen. Diese Lordosenstützen müssen jedoch, um den erwünschten Zweck zu erreichen, der natürlichen ursprünglich vorgesehenen Wölbung des Rückgrates angepaßt sein. Derartige Lordosenstützen können höhenverstellbar ausgebildet werden, um den unterschiedlichen Rückenlängen und damit unterschiedlichen Höhen der Lordose angepaßt zu sein. Eine derartige Höhenverstellbarkeit ist gegebenenfalls vernachlässigbar, da geographische Regionen in der Regel ein relativ scharfes Maximum der wahrscheinlichen Größe aufweisen. Von besonderer Bedeutung ist allerdings, die konvexe Ausbildung der Lordose, da auch bei einer Größe unterschiedliche Krümmungen vorliegen und die Unterstützung nicht nur an ein oder zwei Wirbeln des Rückgrates erfolgen soll, sondern eine möglichst hohe Anzahl von Wirbeln gestützt werden muß, um den erwünschten Zweck der geringen Ermüdung und Vermeidung von Schmerzen zu erreichen. Derartige Lordosenstützen können auch asymmetrische Krümmungen aufweisen, die z. B. durch Ausbildung unterschiedlicher Materialstärken eines Stützteiles in Richtung parallel zur Wirbelsäule bei Wölbung des Stützteiles erreicht werden.

Es sind unterschiedlich technisch ausgebildete Lordosenstützen bekannt. Eine der einfachsten Form besteht im Vorsehen eines aufblasbaren Zylinders im wahrscheinlichen Bereich der Lordose. Neben der technischen Schwierigkeit, daß ein Pumpenaggregat zur Vergrößerung der Lordosenstütze vorgesehen sein muß, tritt eine Anpassung der Lordosenstütze aufgrund der identen Verformungskräfte entlang der Krümmung an die unerwünschte bereits vorliegende falsche Verkrümmung des Rückgrates ein.

Eine weitere Lordosenstütze besteht darin, daß zwei aneinander angelenkte Teile entlang einer Führung zueinander bzw. auseinander geschoben werden können. Diese bekannte Lordosenstütze weist den Nachteil auf, daß keine variabel ausgebildete Krümmung vorliegt, so daß eine Unterstützung der Lordose lediglich in einem engen Bereich der höchsten Stelle vorgesehen ist, womit lediglich ein oder zwei Wirbel unterstützt werden und die anderen Wirbel der Lordose erneut willkürlich nachgestellt werden müssen. Eine derartige Lordosenstütze ist beispielsweise in der WO 95/19123 beschrieben.

Eine weitere Ausführungsform von Lordosenstützen weist einen im wesentlichen flächigen Stützenteil auf, wobei die Fläche entweder Durchbrechungen besitzt oder einzelne nebeneinander angeordnete Stützelemente aufweist, die gegebenenfalls von der Mitte nach außen sich verjüngend ausgebildet sind. Dieser flächige Stützteil ist mit seinen beiden Endbereichen zueinander bewegbar, so daß eine Wölbung desselben erreichbar ist. Durch unterschiedliche Dickenausbildung gemäß EP 0 698 360 B kann eine erwünschte asymmetrische Form, die im wesentlichen einer Lordose entspricht erreicht werden.

Oben angeführte Lordosenstützen sind in der Regel mit einem Rahmen, beispielsweise des Rückenteiles eines Sitzes, z. B. eines Autositzes, verbunden. Hierbei ist der Stützteil der Lordosenstütze beispielsweise mit einem weiteren Rahmen verbunden, der zwei äußere im wesentlichen parallel zur Wirbelsäule verlaufende Träger aufweist, entlang welcher Gleitelemente z. B. für die kniehebelartigwirkende Lordosenstütze bewegbar sind bzw. an welchen Querträger für den wölbbaren Stützteil lagefixiert angeordnet sind.

Diese Befestigung des Stützteiles an den äußeren Trägern ist für die dauerhafte Befestigung desselben von hervorragender Bedeutung. Der Stützteil ist in der Regel nicht integral mit dem Rahmen des Sitzes oder der Liege ausgebildet, sondern wird getrennt von demselben gefertigt. Die Verbindung des Stützteiles erfolgt je nach Dimensionierung desselben entweder über einen Zwischenteil oder direkt mit dem Rahmen. Diese Verbindung ist elastisch verformbar ausgebildet. Eine derartige Verbindung ist beispielsweise in der o.g. AT 402.145 B beschrieben, wobei in den Endbereichen einer anatomisch formbaren Stütze hinterschnittene Aufnahmen vorgesehen sind, in welche Drähte eindrückbar sind, und ein starrer Steg und ein elastisch verformbarer Steg vorgesehen sind. Die lichte Weite der Aufnahme ist geringer als der Durchmesser des die beiden Träger verbindenden Drahtes.

Bei zwei Drähten müssen diese in der Lage sein, die gesamten auf den Stützteil einwirkenden Kräfte auf den Rahmen zu übertragen. Die Folge davon ist, daß diese Drähte besonders stark dimensioniert werden müssen, wodurch einerseits die Kräfte, welche bei Krümmung des Stützteiles aufgebracht werden müssen, relativ hoch sind, da bei Wölbung desselben die beiden Endbereiche zueinander bewegt werden, so daß eine Deformation dieser Drähte zueinander erfolgen muß, wobei weiters die Stützkräfte der Lordose so hoch sind, daß eine Anpassung an die aktuelle erforderliche Krümmung nicht immer im erwünschten Ausmaß erfolgt. Um diese leichtere Anpassung des Stützteiles zu ermöglichen und gleichzeitig die Montage dieser Drähte zu erleichtern, ist es bekannt, anstelle jeweils eines Drahtes zumindest zwei Drähte an einem oder beiden Endbereichen des Stützteiles vorzusehen. Eine derartige Lösung ist z. B. in der EP 0 780 262 A1 beschrieben. Bei diesem Lordosenstützteil ist in den beiden Endbereichen eine Aufnahme für jeweils zwei Drähte vorgesehen, wobei die Aufnahme durch einen flexiblen Steg zweigeteilt ist. Die lichte Weite der Aufnahme ist kleiner als die Summe der Durchmesser beider Drähte. Da die Tiefe der Aufnahme größer als der Durchmesser der Drähte ist, kann bei einem Draht am Grund der Aufnahme der andere Draht nicht nur in die Ausnahme leicht eingeführt, sondern auch mit außerordentlich geringster Kraft - es muß lediglich der flexible Teil geringfügig verbogen werden, da die beiden die Aufnahme im wesentlichen starr begrenzenden Stege lediglich geringfügig verstärkt ausgebildet sind - aus der Aufnahme entnommen werden. Damit kann bei Krümmung des Stützteiles, wobei eine unterschiedliche Lage der beiden Drähte, bezogen auf die Öffnung desselben, bedingt ist, ein Ausgleiten eines Drahtes aus der Aufnahme bevorzugt erfolgen. Nach dem Austritt eines Drahtes aus der Aufnahme ist der flexible Steg nicht mehr in der Lage, für den weiteren Draht eine Begrenzung der Austrittsöffnung aus der Aufnahme zu bewirken, die geringer als der Durchmesser des Drahtes ist, so daß nach Austritt des ersten Drahtes aus der Ausnehmung der zweite Draht mit geringsten Kräften aus der Aufnahme austreten kann. Werden beide Drähte gleichzeitig aus der Ausnehmung bewegt, so muß für beide lediglich eine Kraft von 60 Kilopond pro cm der Ausnehmung aufgebracht werden.

Aus der WO 95/19123 wird eine Lordosenstütze bekannt, die keinen wölbbaren Stützteil, sondern zwei aneinander angelenkte Schenkel aufweist. Die Enden der Schenkelteile sind gegeneinander bewegbar und die anderen Enden sind über eine zwei zylindrische Aufnahmen aufweisende Schiene verbunden. Diese Schiene, welche als alleinige Lordosenstütze dient, kann anstelle der zwei zylinderförmigen Aufnahmen über zwei nebeneinanderliegende teilzylinderförmige Aufnahmen gebildet sein, die durch einen gemeinsamen starren Mittelteil und außenliegenden durchgehenden teilzylinderförmig ausgebildeten elastischen Stegen aufgebaut sind, so daß die Metallschenkel in dieselben eingedrückt werden können. Die Kräfte, welche auf dieser Schiene während des Gebrauches einwirken, sind immer derart, daß die Drahtbügel in die Ausnehmung hineingedrückt werden. Kräfte in entgegengesetzte Richtung wirken nicht ein.

Der Erfindung ist zur Aufgabe gestellt, eine anatomisch formbare Stütze zu schaffen, die nicht nur die punkt- oder linienförmige Unterstützung von Körperteilen ermöglicht, sondern eine flächige Unterstützung von menschlichen Körperteilen, insbesondere der Wirbelsäule, erlaubt. Weiters ist zur Aufgabe gestellt, den Stützteil an einem Rahmen derart zu befestigen, daß relativ geringe Verstellkräfte angebracht werden müssen, um die erwünschte Wölbung zu erreichen. Eine weitere Aufgabe besteht darin, die automatische Fertigung zu vereinfachen, um einen breiten Einsatz, insbesondere bei Sitzen von Transportmitteln, wie landgebundenen Kraftfahrzeugen aber auch Flugzeugen zu ermöglichen. Eine zusätzliche Aufgabe der vorliegenden Erfindung besteht darin, daß die Kräfte, welche erforderlich sind, die Lordosenstütze aus ihren einzelnen Befestigungsdrähten herauszurücken, möglichst hoch sind, so daß ein stufenweise Herausgleiten der Befestigungsdrähte aus der bzw. den Aufnahmen besonders einfach vermieden werden kann und dies selbst bei Wölbung des Stützteiles, bei welchen unterschiedlich hohe Kräfte auf die nebeneinanderliegenden Drähte einwirken. Weiters soll auch erreicht werden, daß die Funktionssicherheit des Stützteiles bei nicht durch den Benützer unmittelbar bedingten Kräften gewährleistet ist. Hierbei ist insbesondere auf gegebenenfalls während eines Bremsvorganges sich nach vorne bewegende Ladegüter hinzuweisen, welche die Lordosenstütze entgegen die Richtung des bestimmungsgemäßen Gebrauches beaufschlagen, da keine zusätzlichen Barrieren vorliegen.

Die Erfindung geht von einem Stand der Technik aus, wie er durch die AT 402.145 B gegeben ist.

Die erfindungsgemäße anatomisch formbare Stütze, insbesondere Lordosenstütze, für Sitze, Liegen od. dgl. mit einem Rahmen, welcher mit einem reversibel wölbbaren anatomisch wirksamen Stützteil verbunden ist, mit einer zum Benützer weisenden Seite, die von einem Polsterteil abdeckbar ist, wobei eine dieser Seite gegenüberliegende Seite Aufnahmen für im Querschnitt im wesentlichen kreisförmige Zylinder, z. B. Drähte, besitzt, und vorzugsweise die im wesentlichen kreisförmigen Zylinder in ihrer Längsrichtung elastisch verformbar sind und der Stützteil mittel- und/oder unmittelbar mit dem Rahmen verbunden ist, wobei die Aufnahmen an zumindest einem Endbereich, insbesondere an zumindest einem Ende des Stützteiles, vorgesehen sind, und zumindest eine Öffnung aufweisen, deren lichte Weite normal zur Längsrichtung des im wesentlichen kreisförmigen Zylinders gesehen geringer ist als dessen Durchmesser, besteht darin, daß zumindest zwei benachbarte Aufnahmen quer zur Längsrichtung des im wesentlichen kreisförmigen Zylinders gesehen, zur Aufnahme von je einem im wesentlichen kreisförmigen Zylinder vorgesehen sind, wobei die Aufnahmen mit einem gemeinsamen starren an seinem distalen Ende verdickten Steg und jeweils einem elastisch biegbaren Steg ausgebildet sind.

Durch einen reversibel wölbbaren den anatomisch erforderlichen Bedingungen anpaßbaren Stützteil kann erreicht werden, daß nicht nur eine punkt- oder linienförmige Unterstützung erfolgt, so daß beispielsweise bei einer Lordosenstütze nicht nur ein Wirbel, sondern eine Mehrzahl von Wirbeln gestützt werden. Die kreisförmigen Zylinder, beispielsweise Drähte, glasfaserverstärkte Polyesterstäbe, aber auch Hohlzylinder, durch welche andere Tragelemente hindurchgeführt sind, ermöglichen eine nicht lagespezifische Fixierung der Befestigungselemente. Sind die kreisförmigen Zylinder in ihrer Längsrichtung elastisch verformbar, so kann die Wölbung des Stützteiles durch Zueinanderbewegen der beiden Endbereiche besonders einfach verwirklicht werden. Die Verbindung des anatomisch wirksamen Stützteiles kann entweder direkt am Rahmen, beispielsweise mit Zugfedern oder mittelbar über einen zusätzlichen Rahmen oder Längselemente, die ihrerseits federnd im Rahmen verankert sind, erfolgen. Die Aufnahmen für die im wesentlichen kreisförmigen Zylinder weisen eine Öffnung auf, deren lichte Weite normal zur Längsrichtung des im wesentlichen kreisförmigen Zylinders gesehen geringer ist als dessen Durchmesser, so daß die Zylinder in die Aufnahme hineingedrückt werden können und in dieser sodann festgehalten sind. Sind zumindest zwei benachbarte Aufnahmen quer zur Längsrichtung des im wesentlichen kreisförmigen Zylinders gesehen zur Aufnahme von je einem im wesentlichen kreisförmigen Zylinders vorgesehen, so können zwei oder mehrere im wesentlichen kreisförmige Zylinder, z. B. Drähte, zur Befestigung des anatomisch wirksamen Stützteiles vorgesehen sein, womit eine einfache automatengebundene Fertigung der anatomisch formbaren Stütze ermöglicht ist, da die auf dem anatomisch wirksamen Stützteil einwirkenden Kräfte nicht auf einen, sondern auf zumindest zwei Drähte übertragen werden können, wohingegen die Kraft, welche zur Verbindung bei der Fertigung erforderlich sind, jeweils auf einen Draht mit geringerem Deformationswiderstand beschränkt werden kann. Durch das Vorsehen eines gemeinsamen starren an seinem distalen Ende verdickten Steges wird das Rückhalten der Zylinder besonders einfach und wirksam ermöglicht, wobei durch die beidseits zu dem starren Steg vorgesehenen elastisch biegbaren Stege eine einfache Montage ermöglicht ist.

Weist der starre Steg an seinem verdickt ausgebildeten distalen Ende eine, insbesondere ebene, Fläche an seiner dem Boden der Aufnahme gegenüberliegenden Seite auf, die einen spitzen Winkel, insbesondere von 60° bis 80°, vorzugsweise von 75° bis 80°, mit der Längsrichtung des Querschnittes des starren Steges einschließt, so kann bewirkt werden, daß bei einer Krafteinwirkung entgegengesetzt zum bestimmungsgemäßen Gebrauch der im wesentlichen kreisförmige Zylinder gegen den starren Teil bewegt wird, womit erhöhte Kräfte zum Herauslösen erforderlich werden.

Weist der starre Steg an seinem verdickt ausgebildeten distalen Ende eine Fläche an seiner dem Boden der Aufnahme gegenüberliegenden Seite auf, deren Tangente im Endbereich einen spitzen Winkel, insbesondere von 60° bis 80°, vorzugsweise von 75° bis 80°, mit der Längsrichtung des Querschnittes des starren Steges einschließt, so ist selbst bei gekrümmten nicht ebenen Flächen des distalen Endes des starren Teiles sichergestellt, daß besonders hohe Kräfte aufgebracht werden müssen, um die Zylinder aus der Aufnahme zu bewegen.

Weist der starre Steg an seinem verdickt ausgebildeten distalen freien Ende eine Fläche auf, die einen Winkel von 50° bis 60° mit der Längsrichtung des Querschnittes des starren Steges einschließt, so kann der Zylinder mit besonders geringen Kräften in die Aufnahme hineingedrückt werden.

Ist durch das verdickt ausgebildete distale Ende des starren Steges ein Haken für den Zylinder gebildet, so kann der Zylinder besonders wirksam in der Ausnehmung zurückgehalten werden.

Weist die Öffnung außerhalb der distalen Verdickung, insbesondere des Hakens, eine freie Quererstreckung auf, welche größer ist als der halbe Durchmesser des im wesentlichen kreisförmigen Zylinders, so ist sichergestellt, daß bei Herausbewegen des Zylinders derselbe gegen den starren Steg gedrückt wird, so daß eine besonders sichere Fixierung des Zylinders in der Aufnahme verwirklicht ist.

Ist die lichte Weite der Aufnahme außerhalb des verdickten distalen Endes des starren Steges bei unverformtem, elastisch biegbarem Steg geringer als der Durchmesser des im wesentlichen kreisförmigen Zylinders, so ist sichergestellt, daß der elastisch biegbare Steg den Zylinder gegen den starren Steg drückt und somit die Kraft gegen das Herausziehen desselben durch die Dimensionierung des starren Steges vorgegeben ist.

Weist das distale freie Ende des elastisch biegbaren Steges eine, insbesondere ebene, Fläche auf, die einen Winkel von 50° bis 60° mit der Längsrichtung des Querschnittes des starren Steges einschließt, so können die Kräfte zum Eindrücken des Zylinders in die Aufnehmung wesentlich geringer gehalten werden als die Kräfte, die erforderlich sind, den Zylinder aus der Aufnahme herauszudrücken.

Ist der elastisch biegbare Steg zum distalen Ende sich verjüngend ausgebildet, so kann bei der Befestigung des Stützteiles im Rahmen am Beginn der Befestigung eine besonders geringe Kraft eingesetzt werden.

Im folgenden wird die Erfindung anhand der Zeichnungen näher erläutert.

Es zeigen:
- Fig. 1: einen in einem Rahmen angeordneten Stützteil in Sicht auf den Rücken des Benützers,
- Fig. 2: einen Schnitt gemäß Fig. 1 entlang der Linie (II-II),
- Fig. 3: einen Schnitt durch die Aufnahme eines Stützteiles im oberen Bereich desselben und
- Fig. 4: einen Schnitt durch die Aufnahme eines Stützteiles im unteren Bereich desselben.

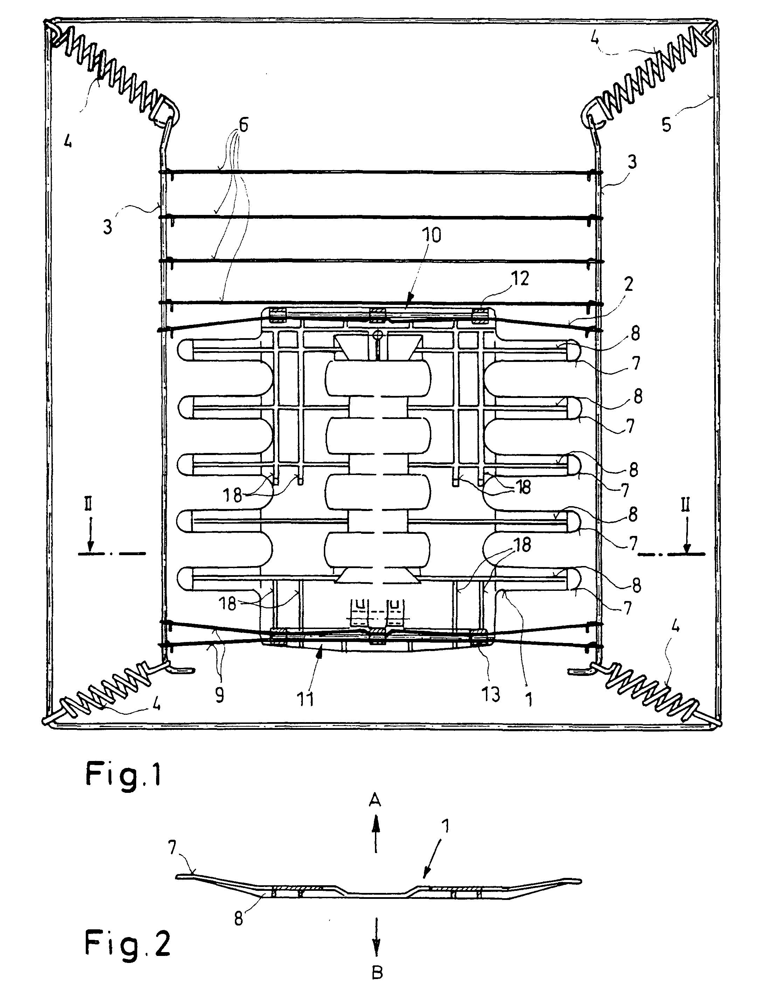

Der in Fig. 1 dargestellte Stützteil 1 ist mit Drähten 2, 9, die im Querschnitt kreisförmig sind und daher kreisförmige Zylinder darstellen, mit den Trägern 3 verbunden, welche in etwa parallel zur Wirbelsäule eines Benützers verlaufen. Diese Träger sind ihrerseits über Zugfedern 4 mit einem Rahmen 5 verbunden. Dieser Rahmen 5 ist entsprechend den Erfordernissen, beispielsweise als Sitzteil eines Autositzes, als Liegeteil einer Liege oder auch als Lehnenteil eines Autositzes zur Unterstützung der Lordose ausgebildet. Die Träger 3 sind über Drähte 6 gegeneinander in Abstand gehalten. Anstelle von Drähten aus Metall können auch andere Elemente, wie beispielsweise Kunststoffprofile, die vorzugsweise mit Glas- oder Kohlenstoffasern verstärkt sind, aber auch Seile zum Einsatz kommen. Der Stützteil 1 ist aus einem faserverstärkten Kunststoff gefertigt und weist beidseitig auskragende einzelne Stützelemente 7 auf, die Stege 8 besitzen, welche sich zu ihrem distalen Ende verjüngen, so daß abgesehen von der Hebelwirkung die Verformbarkeit der Stützelemente im äußeren Bereich größer ist als im zur Mitte näheren Bereich, womit der Körperteil eines Benützers, insbesondere der Rücken, in eine erwünschte mittige Position geleitet wird, ohne dadurch erhöhte Druckstellen zu bewirken. Der Stützteil 1 ist oben nur über einen Draht 2, unten jedoch über zwei Drähte 9, die im Querschnitt kreisförmig ausgebildet sind, mit den Trägern 3 verbunden. Die Drähte 9 sind auf dem Träger 3 in Abstand zueinander angeordnet, so daß eine maschinengerechte Fertigung einfach verwirklicht werden kann.

Ein nicht in Fig. 1 dargestellter Bowdenzug kann im Stützteil 1 derart angeordnet werden, daß die beiden Endbereiche 10, 11 zueinander bewegt werden, wodurch eine Krümmung des Stützteiles erreicht wird. Durch die nicht durchgehenden weiteren Stege 18 wird eine Verstärkung des Stützteiles 1 bewirkt, so daß keine symmetrische, sondern eine asymmetrische Verformung desselben erfolgen kann, womit eine Anpassung des Stützteiles an die natürliche Form einer Lordose einfach bewirkt wird.

Wie in Fig. 2 ersichtlich, weist der Stützteil 1 eine zum Benützer weisende Seite A auf, die im wesentlichen flächig ohne Unstetigkeitsstellen ausgebildet ist, wohingegen die gegenüberliegende Seite B die Stege, Drähte, Bowdenzug u. dgl. aufweist. Die Seite A ist von einem nicht dargestellten Polsterteil überzogen, so daß ein besonders hoher Komfort für den Benützer gegeben ist. Die Stützelemente 7 sind zum Benützer geneigt ausgebildet, womit eine Art Mulde gebildet ist, wobei weiters durch die zum distalen Ende abnehmenden Stege 8 eine besonders hohe Nachgiebigkeit im Endbereich der Stützelemente 7 gewährleistet ist.

Wie in Fig. 1 besonders deutlich sichtbar, ist der Stützteil 1 in seinem oberen und unteren Endbereich 10, 11 über Drähte 2 und 9, die in Aufnahmen 12, 13 im Stützteil fixiert sind, an den Trägern 3 befestigt. Der Stützteil ist aus Kunststoff ausgebildet, kann jedoch auch als Gitterelement, beispielsweise mit Stahlfedern, die quer und längs angeordnet sind und miteinander, beispielsweise durch Nieten, verbunden sind, ausgebildet sein.

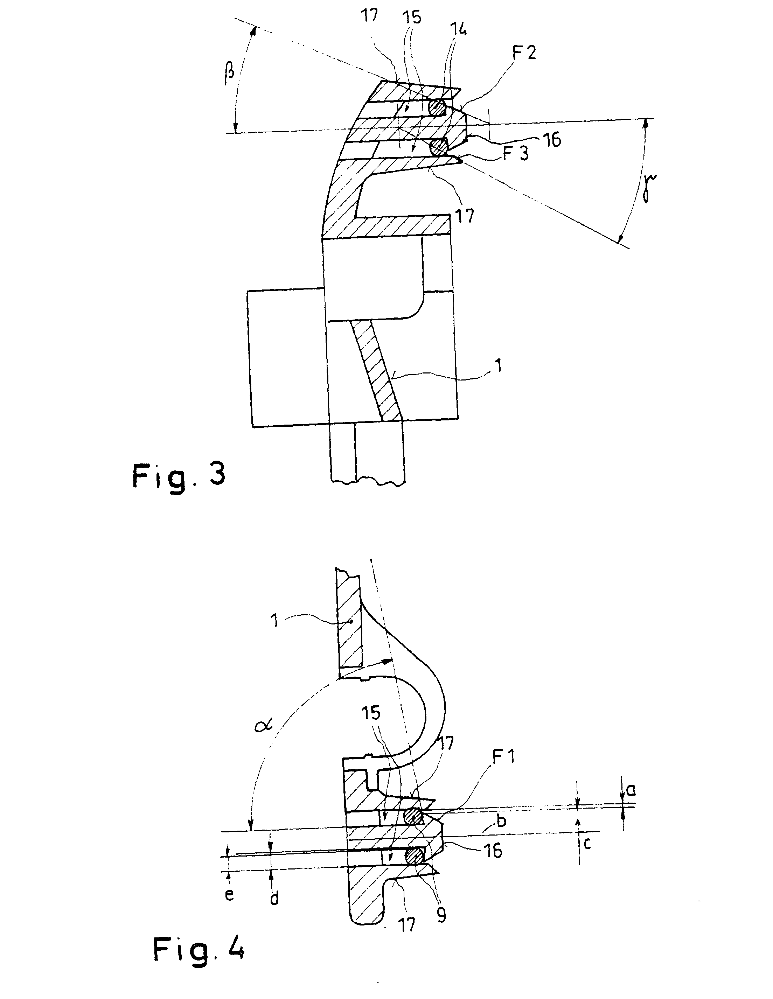

In den Fig. 3 und 4 ist im Schnitt eine obere Aufnahme und eine untere Aufnahme des Stützteiles 1 dargestellt, wobei abweichend zur Fig. 1 auch in der oberen Aufnahme zwei Drähte 14 angeordnet sind. Es sind jeweils zwei einzelne Aufnahmen 15 vorgesehen, die einen gemeinsamen starren Steg 16 besitzen und nach außen durch einen elastisch biegbaren Steg 17 begrenzt sind. Die lichte Weite a der Aufnahme beträgt 0,5 mm und damit ca. ein Drittel des Durchmessers d (1,6 mm) der Drähte 14 bzw. 9. Die freie Erstreckung c des durch die distale Verdickung gebildeten Haken ist größer als der halbe Durchmesser d des Drahtes. Der starre Steg 16 ist an seinem distalen Ende hakenförmig verdickt ausgebildet, wobei die Fläche F₁ mit einer Parallelen zur Längsrichtung b des starren Steges 16 einen Winkel α von 80° einschließt. Durch diese Fläche F₁ wird bei einer Bewegung der Drähte 9 bzw. 14 aus der Aufnahme 15 derselbe gegen den starren Steg 16 geleitet, so daß die Kraft zum Herausbewegen des Drahtes aus der Ausnehmung nicht durch die Kraft, welche erforderlich ist, um eine elastische Deformation des deformierbaren Steges 17 zu bewirken, definiert ist, sondern durch die Festigkeit des starren Steges festgelegt ist. Außerhalb der distalen Verdickung weist die Aufnahme eine lichte Weite e auf, die geringer ist als der Durchmesser d des Drahtes 9. Weiters ist durch die Befestigung der Drähte jeweils in einer eigenen Aufnahme keine gegenseitige Abhängigkeit gegeben, so daß auch bei extremer Krümmung eine sichere Befestigung des Stützteiles im Träger oder auch Rahmen gewährleistet ist. Der starre Steg 16 weist an seinem freien Ende eine im wesentlichen ebene Fläche F₂ auf, die mit der Längsrichtung b des starren Steges 16 einen Winkel β von 55° einschließt. Der elastisch biegbare Steg 17 weist am Ende eine Fläche F₃ auf, die mit der Längsrichtung b des starren Steges 16 einen Winkel γ von 60° einschließt. Durch diese Anordnung der Flächen F₂ und F₃ kann eine besonders einfache Befestigung des Stützteiles 1 an den Drähten und damit an den Trägern 3 bzw. am Rahmen 5 folgen, da die Kräfte zum Eindrücken der Drähte aufgrund der geneigten Flächen besonders gering gehalten werden können, die somit wesentlich geringer als die Kräfte beim Herausziehen der Drähte sind. Die Drähte 9 und 14 weisen einen Durchmesser d von 1,6 mm auf und werden von den elastisch biegbaren Stegen 17 gegen den starren Teil gedrückt. Die Kraft zum Herausziehen eines Drahtes aus der Ausnehmung beträgt 75 Kilopond pro cm, für zwei Drähte somit 150 Kilopond pro cm der distalen Verdickung des starren Teiles. Falls erwünscht, können entweder durch breitere Ausbildung oder Vergrößerung der Anzahl der Aufnahmen die Kräfte, welche erforderlich sind, um die Befestigung der Stütze mit den Drähten zu lösen, erhöht werden.

## Patentansprüche

1. Anatomisch formbare Stütze, insbesondere Lordosenstütze, für Sitze, Liegen od. dgl. mit einem Rahmen (5), welcher mit einem reversibel wölbbaren anatomisch wirksamen Stützteil (1) verbunden ist, mit einer zum Benützer weisenden Seite (A), die von einem Polsterteil abdeckbar ist, wobei eine dieser Seite (A) gegenüberliegende Seite (B) Aufnahmen (12, 13, 15) für im Querschnitt im wesentlichen kreisförmige Zylinder, z. B. Drähte (2, 9, 14), besitzt, und vorzugsweise die im wesentlichen kreisförmigen Zylinder in ihrer Längsrichtung elastisch verformbar sind und der Stützteil (1) mittel- und/oder unmittelbar mit dem Rahmen (5) verbunden ist, wobei die Aufnahmen (12, 13, 15) an zumindest einem Endbereich (10, 11), insbesondere an zumindest einem Ende des Stützteiles (1) eine Öffnung aufweisen, deren lichte Weite (a) normal zur Längsrichtung des im wesentlichen kreisförmigen Zylinders gesehen geringer ist als dessen Durchmesser (d), **dadurch gekennzeichnet, daß** zumindest zwei benachbarte Aufnahmen (15) quer zur Längsrichtung des im wesentlichen kreisförmigen Zylinders gesehen, zur Aufnahme von je einem im wesentlichen kreisförmigen Zylinder (9, 14) vorgesehen sind, wobei die Aufnahmen mit einem gemeinsamen starren an seinem distalen Ende verdickten Steg (16) und jeweils einem elastisch biegbaren Steg (17) ausgebildet sind.

2. Anatomisch formbare Stütze nach Anspruch 1, **dadurch gekennzeichnet, daß** der starre Steg (16) an seinem verdickt ausgebildeten distalen Ende eine, insbesondere ebene, Fläche (F₁) an seiner dem Boden der Aufnahme (15) gegenüberliegenden Seite aufweist, die einen spitzen Winkel (α), insbesondere von 60° bis 80°, vorzugsweise von 75° bis 80°, mit der der Längsrichtung (b) des Querschnittes des starren Steges (16) einschließt.

3. Anatomisch formbare Stütze nach Anspruch 1 oder 2, **dadurch gekennzeichnet, daß** der starre Steg (16) an seinem verdickt ausgebildeten distalen Ende eine Fläche (F₁) an seiner dem Boden der Aufnahme (15) gegenüberliegenden Seite aufweist, deren Tangente im Endbereich einen spitzen Winkel (α), insbesondere von 60° bis 80°, vorzugsweise von 75° bis 80°, mit der Längsrichtung (b) des Querschnittes des starren Steges (16) einschließt.

4. Anatomisch formbare Stütze nach einem der Ansprüche 1, 2 oder 3, **dadurch gekennzeichnet, daß** der starre Steg (16) an seinem verdickt ausgebildeten distalen freien Ende eine Fläche (F₂) aufweist, die einen Winkel (β) von 50° bis 60°. mit der Längsrichtung (b) des Querschnittes des starren Steges (16) einschließt.

5. Anatomisch formbare Stütze nach einem der Ansprüche 1 bis 4, **dadurch gekennzeichnet, daß** durch das verdickt ausgebildete distale Ende des starren Steges (16) ein Haken für den Zylinder gebildet ist.

6. Anatomisch formbare Stütze nach einem der Ansprüche 1 bis 5, **dadurch gekennzeichnet, daß** die Öffnung außerhalb der distalen Verdickung, insbesondere der Haken, eine freie Quererstreckung (c) aufweist, welche größer ist als der halbe Durchmesser (d) des im wesentlichen kreisförmigen Zylinders.

7. Anatomisch formbare Stütze nach einem der Ansprüche 1 bis 6, **dadurch gekennzeichnet, daß** die lichte Weite (e) der Aufnahme (15) außerhalb des verdickten distalen Endes des starren Steges (16) bei unverformtem, elastisch biegbarem Steg geringer ist als der Durchmesser (d) des im wesentlichen kreisförmigen Zylinders.

8. Anatomisch formbare Stütze nach einem der Ansprüche 1 bis 7, **dadurch gekennzeichnet, daß** das distale freie Ende des elastisch biegbaren Steges (17) eine, insbesondere ebene, Fläche (F₃) aufweist, die einen Winkel (γ) von 50° bis 60° mit der Längsrichtung (b) des Querschnittes des starren Steges (16) einschließt.

9. Anatomisch formbare Stütze nach einem der Ansprüche 1 bis 8, **dadurch gekennzeichnet, daß** der elastisch biegbare Steg (17) sich zum distalen Ende verjüngend ausgebildet ist.

## Claims

1. An anatomically deformable support, in particular a lordosis support, for seats, couches or the like with a frame (5) that is connected with an anatomically effective supporting part (1) that can be arched in a reversible manner, with a side (*A*) that can be covered by a cushion, facing the user, while a side (*B*) situated opposite that side (*A*) has mountings (12, 13, 15) for cylinders having essentially circular sections, e.g. wires (2, 9, 14), and the essentially circular cylinders are preferably elastically deformable in their longitudinal direction and the supporting part (1) is indirectly and/or directly connected to the frame (5), while the mountings (12, 13, 15) has at least in one end region (10, 11), in particular at least at one end of the supporting part (1) an opening, the inside width (*a*) of which viewed perpendicularly to the longitudinal direction of the essentially circular cylinder is smaller than said cylinder's diameter (*d*), **characterised in that** at least two adjacent mountings (15) are provided perpendicularly to the longitudinal direction of the essentially circular cylinder, each to accommodate one essentially circular cylinder (9, 14), while the mountings are formed with a common rigid web (16) thickened at its distal end and with an elastically flexible web (17).

2. An anatomically deformable support according to claim 1, **characterised in that** at its thick distal end the rigid web (16) has a particularly flat surface (*F*_{*1*}) on that side that is averted from the bottom of the mounting (15), that surface enclosing with the longitudinal direction (*b*) of the cross-section of the rigid web (16) an acute angle (α), in particular from 60° to 80°, preferably from 75° to 80°.

3. An anatomically deformable support according to claim 1 or 2, **characterised in that** at its thick distal end the rigid web (16) has a surface (*F*_{*1*}) on that side that is averted from the bottom of the mounting (15), the tangent of which surface in the end region encloses with the longitudinal direction (*b*) of the cross-section of the rigid web (16) an acute angle (α), in particular from 60° to 80°, preferably from 75° to 80°.

4. An anatomically deformable support according to any of claims 1, 2 or 3, **characterised in that** at its thick distal end the rigid web (16) has a surface (*F*_{*2*}) that encloses with the longitudinal direction (*b*) of the cross-section of the rigid web (16) an angle (β) from 50° to 60°.

5. An anatomically deformable support according to any of claims 1 to 4, **characterised in that** by the thick distal end of the rigid web (16) a hook is formed for the cylinder.

6. An anatomically deformable support according to any of claims 1 to 5, **characterised in that** outside of the distal thickening, particularly of the hooks, the opening has a transverse extension (*c*) that is greater than half of the diameter (*d*) of the essentially circular cylinder.

7. An anatomically deformable support according to any of claims 1 to 6, **characterised in that** the inside width (*e*) of the mounting (15) outside of the thickened distal end of the rigid web (16), with the elastically flexible web undeformed, is smaller than the diameter (*d*) of the essentially circular cylinder.

8. An anatomically deformable support according to any of claims 1 to 7, **characterised in that** the distal free end of the elastically flexible web (17) has a particularly flat surface (F3), that encloses with the longitudinal direction (b) of the cross-section of the rigid web (16) an angle (γ) from 50° to 60°.

9. An anatomically deformable support according to any of claims 1 to 8, **characterised in that** the elastically flexible web (17) is tapered towards the distal end.

## Revendications

1. Dispositif d'appui susceptible d'adopter une forme anatomique, en particulier, appui pour Lordose pour des sièges, des couchages ou analogues, avec un cadre (5), relié à une partie d'appui (1) agissant de façon anatomique, susceptible de recevoir une incurvation réversible, avec une face (A) tournée vers l'utilisateur, susceptible d'être recouverte par une partie de rembourrage, où une face (B), opposée à cette face (A) comporte des logements (12, 13, 15) pour des cylindres à section transversale sensiblement circulaire, par exemple des fils (2, 9, 14) et, de préférence, les cylindres à section transversale sensiblement de forme circulaire étant déformables élastiquement dans leur direction longitudinale, et la partie d'appui (1) étant reliée indirectement et/ou directement au cadre (5), où les logements (12, 13, 15) présentant en au moins une zone d'extrémité (10, 11), en particulier à au moins une extrémité de la partie d'appui (1) une ouverture dont la largeur libre (a) observée dans la direction perpendiculaire à la direction longitudinale du cylindre à section transversale sensiblement circulaire est inférieure à son diamètre (d), **caractérisé en ce qu'**au moins deux logements (15) voisins, observés en direction transversale par rapport à la direction longitudinale du cylindre à section transversale sensiblement circulaire, sont prévus pour loger chacun un cylindre (9, 14) à section transversale sensiblement circulaire, les logements étant réalisés avec une nervure (16) commune, rigide, épaissie à son extrémité distale, et chacun avec une nervure (17) pliante élastiquement.

2. Dispositif d'appui susceptible d'adopter une forme anatomique selon la revendication 1, **caractérisé en ce que** la nervure rigide (16) présente sur son extrémité distale épaissie, une surface (F₁) en particulier plane, sur sa face opposée au fond du logement (15), qui fait un angle (α) aigu, en particulier de 60° à 80°, de préférence de 75° à 80° avec la direction longitudinale (b) de la section transversale de la nervure rigide (16).

3. Dispositif d'appui susceptible d'adopter une forme anatomique selon la revendication 1 ou 2, **caractérisé en ce que** la nervure rigide (16) présente sur son extrémité distale épaissie, une surface (F₁) sur sa face opposée au fond du logement (15), dont la tangente dans la zone d'extrémité fait un angle (α) aigu, en particulier de 60° à 80°, de préférence de 75° à 80° avec la direction longitudinale (b) de la section transversale de la nervure rigide (16).

4. Dispositif d'appui susceptible d'adopter une forme anatomique selon l'une des revendications 1, 2 ou 3, **caractérisé en ce que** la nervure rigide (16) présente sur son extrémité libre distale, épaissie, une surface (F₂) faisant un angle (β) de 50° à 60° avec la direction longitudinale (b) de la section transversale de la nervure rigide (16).

5. Dispositif d'appui susceptible d'adopter une forme anatomique selon l'une des revendications 1 à 4, **caractérisé en ce qu'**un crochet pour le cylindre est formé au moyen de l'extrémité distale épaissie de la nervure rigide (16).

6. Dispositif d'appui susceptible d'adopter une forme anatomique selon l'une des revendications 1 à 5, **caractérisé en ce que** l'ouverture à l'extérieur de l'épaississeme distal, en particulier le crochet, présente une étendue transversale (c) libre, supérieure au demi diamètre (d) du cylindre à section transversale sensiblement circulaire.

7. Dispositif d'appui susceptible d'adopter une forme anatomique selon l'une des revendications 1 à 6, **caractérisé en ce que** la largeur libre (e) du logement (15) à l'extérieur de l'extrémité distale épaissie de la nervure rigide (16), lorsque la nervure flexible élastiquement est à l'état non déformée, est inférieure au diamètre (d) du cylindre à section transversale sensiblement circulaire.

8. Dispositif d'appui susceptible d'adopter une forme anatomique selon l'une des revendications 1 à 7, **caractérisé en ce que** l'extrémité distale libre de la nervure (17) flexible élastiquement présente une surface (F₃) en particulier plane, faisant un angle (γ) de 50° à 60° avec la direction longitudinale (b) de la section transversale de la nervure rigide (16).

9. Dispositif d'appui susceptible d'adopter une forme anatomique selon l'une des revendications 1 à 8, **caractérisé en ce que** la nervure (17) flexible élastiquement va en s'effilant en allant en direction de l'extrémité distale.
